# EUROPÄISCHE PATENTSCHRIFT

(11) **EP 2 702 108 B1**
(45) Veröffentlichungstag und Bekanntmachung des Hinweises auf die Patenterteilung: **21.11.2018**
(21) Anmeldenummer: 12710677.1
(22) Anmeldetag: 14.03.2012
(51) Int. Cl.: C09D 4/06

(54) **BESCHLEUNIGERSYSTEM FÜR DIE HÄRTUNG VON REAKTIONSHARZEN MIT PERMALEINATEN UNTERHALB DER RAUMTEMPERATUR**
ACCELERANT SYSTEM FOR CURING REACTION RESINS HAVING PERMALEINATE BELOW ROOM TEMPERATURE
SYSTÈME D'ACCÉLÉRATEUR POUR LE DURCISSEMENT DE RÉSINES DE RÉACTION AVEC DES PERMALÉINATES AU-DESSOUS DE LA TEMPÉRATURE AMBIANTE

(30) Priorität: 28.04.2011 DE 102011017686
(43) Veröffentlichungstag der Anmeldung: 05.03.2014
(73) Patentinhaber: Evonik Röhm GmbH, 64293 Darmstadt (DE)
(72) Erfinder: HILF, Stefan, 63517 Rodenbach (DE); GRIMM, Sebastian, 63829 Krombach (DE); FLITTNER, Michael, 63776 Mömbris (DE)
(86) Internationale Anmeldenummer: PCT/EP2012/054408
(87) Internationale Veröffentlichungsnummer: WO 2012/146438

(56) Entgegenhaltungen:
- US-A- 3 534 122
- US-A1- 2009 253 845
- US-B1- 6 552 130

## Beschreibung

### Gebiet der Erfindung

Die vorliegende Erfindung umfasst eine neuartige Reaktionsharzformulierung, z.B. zur Markierung von Fahrbahnen oder zur Verwendung als Bodenbeschichtung. Insbesondere betrifft die vorliegende Erfindung Reaktionsharze mit gegenüber dem Stand der Technik deutlich verbessertem Eigenschaftsprofil. So weisen die Reaktionsharze - vor allem basierend auf einem neuartigen Beschleunigersystem - eine verbesserte Kombination aus verkürzter Aushärtezeit, dünneren Schichtdicken und kleineren Gelbwerten auf.

An Reaktionsharze, z.B. im Anwendungsgebiet der Fahrbahnmarkierungen, wird eine Reihe von Ansprüchen gestellt. Zum einen wird von solchen Systemen erwartet, dass sie eine einfache Applizierbarkeit, z.B. Auftragbarkeit auf der Straßenoberfläche, und gleichzeitig eine hohe Lagerstabilität, sowie eine lange Lebensdauer mit sich bringen. Auch von Bedeutung sind eine schnelle Verarbeitbarkeit und insbesondere eine schnelle Aushärtung, z.B. im Falle von Straßenmarkierungen zur schnellen Wiederbefahrbarkeit der markierten Fahrbahnoberfläche.

Darüber hinaus ist es für viele Anwendungsfelder, wie Bodenbeschichtungen oder Fahrbahnmarkierungen, von großem Interesse, langlebige Systeme einzusetzen, die in sehr dünnen Schichten aufgetragen werden können und gleichzeitig umweltschonend sind. So sind Reaktionsharze aufgrund der benötigten Reaktionswärme nach Stand der Technik nur in relativ dicken Schichten von typischerweise mindestens 400 µm zu verwenden. Bei dünneren Schichten wird innerhalb der Matrix keine ausreichende Wärme zum vollständigen Aushärten entwickelt. So können dünne Schichten nur durch zusätzliche Energiezufuhr, beispielsweise durch Licht oder energetische Strahlung, ausreichend ausgehärtet werden. In vielen Anwendungen ist dies jedoch nicht praktikabel. Daher werden nach Stand der Technik für dünnschichtige Systeme heutzutage hauptsächlich lösungsmittel- bzw. wasserbasierte thermoplastische Farben verwendet. Diese haben jedoch entweder durch die Freisetzung großer Mengen volatiler Bestandteile, bzw. im Falle wasserbasierter Systeme durch sehr lange Aushärtezeiten große Nachteile. Des Weiteren weisen beide Alternativen gegenüber Reaktionsharzen deutlich kürzere Lebensdauern, z.B. aufgrund eines höheren Abriebs, auf.

### Stand der Technik

Die in der EP 0 871 678 bzw. der EP 0 871 676 beschriebenen schnell aushärtenden, Polyester-basierenden Systeme sind nicht für dünne Applikationen geeignet. Weiterhin erfolgt die schnelle Aushärtung in beiden Fällen nur an der Oberfläche.

Ein Ansatz zur verbesserten Aushärtung und zur Ermöglichung dünner Schichten ist die Entwicklung neuer Aushärtesysteme.

Das in WO 98/40424 beschriebene, gleichfalls Polyester enthaltende System basiert auf ein Initiatorsystem, enthaltend chloriertes Dibenzoylperoxid und Dibenzoylperoxid, sowie tertiäre aromatische Amine als Beschleuniger. Nachteilig ist dabei, dass zwingend halogenhaltige, genauer chlorhaltige Verbindungen eingesetzt werden müssen, die immer die Gefahr in sich bergen, bei einem späteren Abbau toxikologisch bedenkliche halogenorganische, genauer chloraromatische Abbauprodukte freizusetzen. Weiterhin wurde nicht gezeigt, dass ein solches System in besonders dünnen Schichten verwendbar ist. Weitere Nachteile sind der kleine Temperaturbereich, in dem diese Formulierungen Ihre Geschwindigkeit zeigen sowie eine schlechte UV-Beständigkeit der ungesättigten ethylenischen Verbindungen. Insbesondere zur Herstellung von gegossenen Arbeitsplatten (Casting) mit einer Dicke zumeist von mehreren Zentimetern werden seit langem Permaleinate verwendet. Aufgrund der großen Materialstärke ist eine zusätzliche Wärmezufuhr hier nicht nötig. Ziel der Entwicklung dieser Härtersysteme war nur die schnelle und gleichmäßige Aushärtung.

In der JP 2001040163 werden Permaleate mit Calciumhydroxid aktiviert, in der JP 2000103988 werden zusätzlich weitere Metallkomplexe zugegeben. In der US 6,552,130 erfolgt die zusätzliche Aktivierung der Permaleinate durch Zugabe von Thiosalicylsäure und Aminen. In der US 3,639,370 werden die Permaleinate mit Zinnchlorid (SnCl₂) und einem Mercaptan kombiniert, in der DE 1 745 290 mit Aminen anstelle der Mercaptane. In der US 4,816,492 wird eine Kombination aus Permalienaten und Zinkthioglycolat verwendet. In der US 3,534,122 erfolgt die Aktivierung der Permaleinate mit Hilfe von Phosphinen, in der US 3,639,370 werden neben Alkylphosphinen auch Thioverbindungen zugesetzt.

Keine der ausgeführten Kombinationen reichen als Beschleunigersystem jedoch aus, Reaktionsharze in Schichtdicken unterhalb von 4 mm ausreichend bei Raumtemperatur auszuhärten. Amin enthaltende Systeme, wie z.B. auch die bekannten Reaktionsharze für Straßenmarkierungen oder Topcoats in Bodenbeschichtungen, weisen zusätzlich den Nachteil auf, dass es zwangsläufig zu Gelbverfärbungen kommt.

### Aufgabe

Aufgabe der vorliegenden Erfindung ist in Hinblick auf den Stand der Technik die Bereitstellung von Reaktionsharzen, die auch in dünnen Schichten unterhalb von 4 mm Schichtdicke bei Raumtemperatur aushärtbar sind.

Eine besondere Aufgabe besteht darin, dass das Reaktionsharz gegenüber dem Stand der Technik in dünnen Schichten langlebiger bzw. abriebsfester ist.

US 2009/253845 offenbart ein Reaktionsharz für Fahrbahnmarkierungen aus (Meth)acrylaten, Urethan(meth)acrylaten, Polymeren, Vernetzern, Füllstoffen und einem Initiatorsystem. Das Initiatorsystem setzt sich dabei aus Peroxiden und Beschleunigern, insbesondere tertiären Aminen zusammen. Diese Reaktionsharze lassen sich nicht in besonders dünnen Schichten bei Raumtemperatur aushärten.

Darüber hinaus besteht die Aufgabe, dass diese Reaktionsharze nach dem Applizieren farblos sind und auch unter Witterungsbedingungen über einen längeren Zeitraum keine Verfärbung, insbesondere keine Gelbfärbung aufweisen.

Es besteht darüber hinaus die Aufgabe, auf Basis dieses Reaktionsharzes 2-K-Systeme zur Anwendung als Fahrbahnmarkierung oder zur Bodenbeschichtung, insbesondere als Topcoat, zur Verfügung zu stellen. Diese sollen breit einsetzbar, flexibel formulierbar und relativ lange lagerstabil sein.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch die Bereitstellung eines neuen Reaktionsharzes, genauer durch die Bereitstellung eines neuen Reaktionsharzes auf (Meth)acrylatbasis enthaltend ein neuartiges, aus vier Bestandteilen bestehendes Härtersystem gemäß der Ansprüche 1 bis 17.

Dabei handelt es sich um ein 2K-Reaktionsharz auf (Meth)acrylatbasis, in dem die beiden Komponenten zusammen folgende Inhaltsstoffe aufweisen:
0,5 bis 30 Gew%, bevorzugt 2 bis 20 Gew% mehrfunktionelle Methacrylate als Vernetzer, bevorzugt Dimethacrylate,
20 bis 85 Gew%, bevorzugt 40 bis 75 Gew% (Meth)acrylate und optional mit (Meth)acrylaten copolymerisierbare Monomere,
optional bis zu 50 Gew% Urethan(meth)acrylate,
3 bis 40 Gew%, bevorzugt 15 bis 25 Gew% Präpolymere, bevorzugt Poly(meth)acrylate,
gegebenenfalls weitere Hilfsstoffe und
0,4 bis 10 Gew%, bevorzugt 1,5 bis 7,5 Gew% des neuartigen Härtersystems.

Das Härtersystem enthält folgende Bestandteile
0,15 bis 5 Gew%, bevorzugt 0,5 bis 2,0 Gew% Permaleinate,
0,1 bis 5 Gew%, bevorzugt 0,5 bis 2,5 Gew% eines Zinksalz, bevorzugt Zinkoleat oder ein Zinkalkylglykolthiolats,
0,1 bis 3,5 Gew%, bevorzugt 0,5 bis 2,5 Gew% einer Schwefelverbindung, bevorzugt ein oder mehrere Thiole, und
0,02 bis 1,0 Gew%, bevorzugt 0,05 bis 0,5 Gew% einer Phophorverbindung, bevorzugt ein oder mehrere Phosphine.

Wobei das oder die Permaleinate einerseits und die Phosphorverbindung sowie die Schwefelverbindung andererseits in getrennten Komponenten des 2K-Reaktionsharzes vor dem Zusammenmischen der beiden Komponenten enthalten sind.

Im Falle eines Zinkoleats handelt es sich dabei bevorzugt um Zinkstearat oder ein Zinkalkylthioglykolat, wie z.B. einen Komplex, der aus Ethylhexylthioglykolat und Zink gebildet wird. Bei dem Permaleinat ist insbesondere tert-Butylmonoperoxomaleinsäureester bevorzugt. Die bevorzugtesten Schwefelvebrindungen sind vor allem Alyklthioglykolate, Alykl-di-thioglykolate oder mehrwertige Thioglykolate. Die insbesondere bevorzugte Phosphorverbindung ist Triphenylphosphin.

Im Falle des Zinkstearats kann diese in sämtlichen Komponenten des 2K-Reaktionsharzes enthalten sein oder sogar auf diese verteilt vorliegen. Im Falle eines Zinkalkylglykolthiolats muss dieses in der gleichen Komponente wie die Schwefelverbindung enthalten sein. Bevorzugt wird das Zinkalkylglykolthiolat aus dieser Schwefelverbindung gebildet.

Um die Farblosigkeit und eine Stabilität in Bezug auf eine Gelbverfärbung - wie sie besonders bei Reaktionsharzen des Standes der Technik auftritt - zu gewährleisten, sind die 2K-Reaktionsharze bevorzugt aminfrei.

Bei den weiteren Hilfsstoffen handelt es sich beispielsweise um Stabilisatoren, Inhibitoren, Regler, Entschäumer, Verdicker oder Wachse. Zu den Hilfsstoffen zählen auch Substanzen, die mit Bestandteilen des Härtersystems als Vorformulierungsbestandteil dem Reaktionsharz zugefügt werden. Dazu können vor allem Phlegmatisierungsmittel oder kleine Mengen Lösungsmittel, aber auch Stabilisatoren, Verdicker, Nebenprodukte - wie kleine Mengen anderer Peroxide - oder Dispergiermittel zählen.

Bezüglich der Zusammensetzung der beiden Komponenten gibt es für die erfindungsgemäßen 2K-Reaktionsharze verschiedene Ausführungsformen. Zum einen können die erste und die zweite Komponente des Reaktionsharzes unterschiedlich zusammengesetzt sein. Dabei kann die zweite Komponente ausschließlich aus den Bestandteilen des Härtersystems zusammengesetzt sein, die nicht in der ersten Komponente enthalten sind. es können sich aber auch die anderen Inhaltsstoffe, wie Vernetzer, Präpolymere oder Monomere unterschiedlich auf beide Komponenten verteilen.

In einer anderen Ausführungsform sind die erste und die zweite Komponente des Reaktionsharzes mit Ausnahme der Bestandteile des Härtersystems identisch zusammengesetzt.

In weiteren Ausführungsformen sind die Bestandteile des Härtersystems auf weitere Komponenten derart aufgeteilt, dass z.B. 3K- bzw. Mehrkomponentensysteme erhalten werden.

Eine konkreter bevorzugte Ausführungsform des Reaktionsharzes weist folgende Zusammensetzung auf:
2 Gew% bis 20 Gew% Dimethacrylate,
40 Gew% bis 75 Gew% (Meth)acrylate und optional mit (Meth)acrylaten copolymerisierbare Monomere,
0 Gew% bis 50 Gew% Urethan(meth)acrylate,
15 Gew% bis 35 Gew% Poly(meth)acrylate und gegebenenfalls weitere Hilfsstoffe und
1,5 Gew% bis 7,5 Gew% eines Härtersystems enthaltend
   0,5 Gew% bis 2,0 Gew% eines Alkylmonoperoxomaleinsäureesters,
   0,5 Gew% bis 2,5 Gew% Zinkstearat oder Zink-2-ethylhexylglykolthiolat,
   0,5 Gew% bis 2,5 Gew% Ethylhexylglykolthiolat und
   0,05 Gew% bis 0,5 Gew% Triphenylphosphin.

Auf Basis dieser erfindungsgemäßen Reaktionsharze werden Formulierungen, die eine von optional zwei bis drei Komponenten der gesamten Kaltspritzplastik ausmachen, hergestellt. Diese Formulierungen enthalten z.B. erfindungsgemäß folgende Bestandteile:
- 5 Gew% bis 80 Gew% des erfindungsgemäßen Reaktionsharzes,
- 5 Gew% bis 15 Gew% eines anorganischen Pigments, bevorzugt Titandioxid und
- 15 Gew% bis 90 Gew% weiterer mineralischer Füllstoffe.

Bzw. in einer besonders bevorzugten Formulierung:
- 15 Gew% bis 60 Gew% des erfindungsgemäßen Reaktionsharzes,
- 7 Gew% bis 15 Gew% eines anorganischen Pigments, bevorzugt Titandioxid und
- 50 Gew% bis 60 Gew% weiterer mineralischer Füllstoffe.

Zusätzlich können diese Kaltplastiken weitere Hilfsstoffe wie Netz- und/oder Dispergiermittel, einen griffigen (rutschfesten) Füllstoff und Antiabsetzmittel enthalten. Auch können für Straßenmarkierungen Glaskugeln, die zur Verbesserung der Reflexion zugesetzt werden, in dieser Kaltplastik enthalten sein.

Überraschend wurde gefunden, dass durch Verwendung eines Reaktionsharzes, enthaltend ein aus den vier beschriebenen Bestandteilen bestehendes Härtersystem, entgegen dem Stand der Technik auch in sehr dünnen Schichten bei Raumtemperatur aushärtbar ist.

Durch organische Katalyse mittels der Phosphorverbidnung, z.B. mittels Triphenylphosphin, konnte die Aktivierungsreaktion der Systeme nach Stand der Technik sehr überraschend so weit beschleunigt werden dass eine Härtung auch bei 5°C und darunter noch stattfindet. Weiterhin wird die Härtung durch die Katalyse sehr stark beschleunigt sodass kürzere Aushärtungszeiten realistisch werden.

Die Beschleunigungswirkung basiert auf der nukleophilen Katalyse der Thiol-En Reaktion zwischen dem in dem Härter enthalten Peroxomaleinsäureester und dem enthaltenen Thiol. Diese Reaktion wird durch das ebenfalls in mindestens einer der beiden Komponenten enthaltene Zinksalz - z.B. Zinkstearat katalysiert, kann jedoch unterhalb von ca. 20°C nicht effektiv die Reaktion beschleunigen. Die Zugabe von Phophorverbindungen - wie z. B. Triphenylphosphin - aktiviert diese Reaktion jedoch so stark dass Sie eine Härtung auch in dünnen Schichten bei Raumtemperatur auslöst. dieser Effekt war in Hinblick auf den Stand der Technik nicht zu erwarten.

Überraschend wurde auch gefunden, dass z.B. eine Fahrbahnmarkierung, erhältlich durch Applikation einer erfindungsgemäßen Kaltplastik, enthaltend ein erfindungsgemäßes Reaktionsharz, schnell aushärtet und bereits nach 5 min. und bevorzugt nach 2 min. eine derartige Festigkeit, Untergrundhaftung, Formstabilität und Abriebsfestigkeit aufweist, dass sie wieder befahren werden kann. Das heißt bei Anwendung im Straßenverkehr, dass bei Verwendung des erfindungsgemäßen Systems ein aufwendiges und langwieriges Absperren des zu markierenden Fahrbahnabschnittes nicht mehr nötig ist.

Ein Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat.

Ein optionaler Bestandteil der erfindungsgemäßen Reaktionsharze sind die Urethan(meth)acrylate. Unter diesen versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen Methacrylaten ist EBECRYL 210-5129 der Fa. UCB Chemicals. Urethan(meth)acrylate erhöhen in einem Reaktionsharz, ohne größere Temperaturabhängigkeit, die Flexibilität, die Reißfestigkeit und die Reißdehnung.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Im Einzelnen wird das Poly(meth)acrylat nach Anteil und Zusammensetzung zweckmäßigerweise im Hinblick auf die gewünschte technische Funktion gewählt.

Die Reaktionsharze auf Basis von Monomer-Polymer-Mischungen werden auch MO-PO-Systeme genannt. In diesen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf. Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.

Besagte Polyester werden in Substanz via Polykondensation oder ringöffnende Polymerisation gewonnen und setzen sich aus den für diese Anwendungen bekannten Bausteinen zusammen.

Als Hilfs- und Zusatzstoffe, insbesondere zur Anwendung in Bodenbeschichtungen oder Straßenmarkierungen, können zusätzlich Regler, Weichmacher, Paraffine, Stabilisatoren, Inhibitoren, Wachse und/oder Öle eingesetzt werden.

Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Neben den besonders bevorzugten Schwefelverbindungen können alternativ auch Mercaptane wie n-Dodecylmercaptan oder andere als Regler bekannte Mercaptane eingesetzt werden.

Als Weichmacher werden vorzugsweise Ester, Polyole, Öle, niedermolekulare Polyether oder Phthalate eingesetzt.

Den Kaltplastiken bzw. den die Reaktionsharze enthaltenden Formulierungen können zusätzlich Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.

Für das Einsatzgebiet der Formulierungen als Bodenbeschichtung, Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Bodenbeschichtungen oder Gießharze können aus dekorativen Gründen darüber hinaus Effektpigmente oder so genannte Flakes enthalten. Letztere führen zu einem mehrfarbigen Produkt, dass zum Beispiel das Erscheinungsbild eines Natursteins aufweisen kann.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.

Aus der Gruppe der Stabilisatoren bzw. Inhibitoren werden vorzugsweise substituierte Phenole, Hydrochinonderivate, Phosphine und Phosphite eingesetzt. Alternativ können auch die Phosphorverbindungen des Härtersystems in einer Doppelfunktion als Stabilisatoren wirken.

Folgende Inhaltsstoffe können optional auch in den Kaltplastiken enthalten sein: Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasierten Mineralöle, Glycolderivate, Derivate von Glycolsäureestern, Essigsäureestern und Polysiloxanen eingesetzt.

Diese Formulierungsfreiheiten zeigen, dass das erfindungsgemäße Reaktionsharz bzw. die erfindungsgemäße Kaltplastik, das Reaktionsharz enthaltend, genauso formulierbar und additivierbar ist, wie eine etablierte Kaltplastik des Standes der Technik. Somit sind auch die Abriebfestigkeit, die Langlebigkeit, der Weißgrad, die Pigmentierung, die Farbstabilität und die Griffigkeit mindestens so gut wie bei Systemen des Standes der Technik. Insbesondere in Bezug auf den Weißgrad können mit dem erfindungsgemäßen System sogar bessere Ergebnisse als mit Reaktionsharzen des Standes der Technik erreicht werden.

Zumindest die Vergleichbarkeit mit dem Stand der Technik gilt entsprechend auch bezüglich der Lagerstabilität des Reaktionsharzes. Auch kann das System bezüglich des zu beschichtenden Untergrunds, mittels Wahl geeigneter Monomere, Präpolymere und/oder Haftvermittler, optimiert werden. Die erfindungsgemäßen Systeme sind z.B. variabel optimierbar für die Beschichtung von Asphalt-, Beton-, Estrich- oder Natursteinoberflächen.

Bevorzugte Anwendung finden die erfindungsgemäßen Reaktionsharze, sowie die diese enthaltenden Kaltplastiken bzw. Formulierungen in dünnen Beschichtungen, bevorzugt als Straßenmarkierungen oder in Bodenbeschichtungen, letzteres insbesondere als Topcoat. Damit ist die Verwendbarkeit jedoch weder in Bezug auf dünne Schichten noch auf die bevorzugten Anwendungsgebiete zu beschränken. Vielmehr können die erfindungsgemäßen Reaktionsharze beispielsweise auch als Dichtmasse, Dämpfungsmaterial, Beschichtung waagerechter Flächen oder als Gießharz verwendet werden.

Aufgrund der neuartigen Anwendbarkeit finden die erfindungsgemäßen Reaktionsharze vor allem Verwendung zur Herstellung von Beschichtungen mit einer Dicke zwischen 20 µm und 4 mm, bevorzugt zwischen 50 µm und 2 mm und besonders bevorzugt zwischen 100 und 500 µm.

Besonders bevorzugte Anwendungsfelder für diese Beschichtung sind Fahrbahnmarkierungen, einzelne Schichten einer Bodenbeschichtung oder Topcoats. Die die erfindungsgemäßen Reaktionsharze enthaltenden Kaltplatstiken werden bevorzugt als Fahrbahnmarkierung oder in einer Bodenbeschichtung verwendet.

Es sind jedoch auch andere Anwendungsfelder möglich. Dazu zählen Orthopädieharze, Casting, Reaktivbeschichtungen oder Intumeszenzbeschichtungen. Insbesondere für die beiden letztgenannten Anwendungsfelder sind die erfindungsgemäßen Reaktionsharze sehr geeignet. Auch bezüglich der Applikationstechnologie sind die erfindungsgemäßen Systeme flexibel einsetzbar. Die erfindungsgemäßen Reaktionsharze, bzw. Kaltplastiken können sowohl im Spritz- als auch im Extrusionsverfahren aufgetragen werden. Als Bodenbeschichtung oder Topcoat können diese auch gegossen bzw. verstrichen werden. Als Gießharz bzw. im Anwendungsfeld Casting werden die Reaktionsharze gegossen.

Die 2 Komponenten des 2K-Reaktionsharz werden vor oder während dem Applizieren oder Beschichten miteinander gemischt. Sie können alternativ auch derart aufgetragen werden, dass es nach dem Auftragen und vor dem Aushärten zu einer Durchmischung kommt.

### Beispiele

### Verwendete Materialien:

Als Polymerkomponenten wurden Degalan LP 64/12 und Degalan LP 66/02 (beide Fa. Evonik Röhm) verwendet. Hierbei handelt es sich um Suspensionspolymerisate die Methylmethacrylat und n-Butylmethacrylat in verschiedenen Verhältnissen enthalten und Molmassen zwischen 30 000 und 90 000 g/mol (Mw) aufweisen (ermittelt duch Gelpermeationchromatographie gegen PMMA Standards).

Als Beschleuniger 1 wurde ein Gemisch aus min. 90% Ethylhexylthioglycolat und weiteren Hilfsstoffen und Aktivatoren verwendet. Beispielhaft wurden hier Accelerator CTA (C) und Accelerator ZTA (Z) (beide AkzoNobel) verwendet, wobei im letztgenannten Produkt ein Teil des Thioglycolats durch ca. 6,3 Gew% Zink als Salz gebunden vorliegt.

Als Beschleuniger 2 wurde Triphenylphosphin (TPP) (z.B. Firma Aldrich) verwendet.

Als Härter wurde ein Gemisch aus tert-Butyl-peroxomaleinat und Weichmachern, Phlegmatisierern und weiteren Hilfsmitteln, das einen Peroxidanteil von ca. 40 Gew% aufweist, verwendet. Beispielhaft wurden hier Perkadox PF-MT40 (H1) und Perkadox PFMT40Z (HZ) (beide AkzoNobel) verwendet, wobei das letztgenannte ca. 10 Gew% Zinkstearat enthält.

Zur Ermittlung der Gelzeit wurde das Material durch Kippen des Gefässes in Bewegung gehalten und die Zeit als Gelzeit bestimmt, zu der das Material seine viskose Eigenschaft bzw. Fließfähigkeit verliert und zu einem, zunächst weichen, gelartigen Festkörper erstarrt.

Zur Ermittlung der Topfzeit wurde diejenige Zeit ermittelt, die das Material nach Einrühren des Härters benötigt um sich selbst von Raumtemperatur (20-22 °C) auf 32 °C zu erwärmen.

### Vergleichende Beispiele sind in den Versuchstabellen mit "VB" gekennzeichnet, Beispielergebnisse mit "B"

### Vorstufe 1:

Zu 63 Gewichtsteilen Methylmethacrylat und 5 Gewichtsteilen Triethylenglycoldimethacrylat werden 0,05 Gewichtsteile Topanol-O, 29 Gewichtsteile Degalan LP 66/02), 0,5 Gewichtsteile Sasolwax 5603 gegeben und unter starkem Rühren bei 63°C so lange gemischt, bis alle Polymerbestandteile gelöst sind.

### Vorstufe 2:

Zu 35 Gewichtsteilen Methylmethacrylat, 19 Gewichtsteilen 2-Ethylhexylacrylat, 9 Gewichtsteilen Hydroxypropylmethacrylat und 8 Gewichtsteilen Triethylenglycoldimethacrylat werden 0,05 Gewichtsteile Topanol-O, 18 Gewichtsteile Degalan LP 66/02, 7 Gewichtsteile Degalan LP 64/12, 1 Gewichtsteil Sasolwax 5603 gegeben und unter starkem Rühren bei 63°C so lange gemischt, bis alle Polymerbestandteile gelöst sind.

### Vorstufe 3:

Zu 35 Gewichtsteilen Methylmethacrylat, 35 Gewichtsteilen n-Butylacrylat und 1,5 Gewichtsteilen Triethylenglycoldimethacrylat werden 0,05 Gewichtsteile Topanol-O, 23 Gewichtsteile Degalan LP 66/02, 4 Gewichtsteile Degalan LP 64/12, 0,5 Gewichtsteile Sasolwax 5603 gegeben und unter starkem Rühren bei 63°C so lange gemischt, bis alle Polymerbestandteile gelöst sind.

Allgemeine Vorschrift für Beispiele 1-6 und Vergleichsbeispiele (VB) 1-3:
Zu 100 Gewichtsteilen des Reaktionsharzes das durch Vorstufe 1 erhalten wurde, werden die in Tabelle 1 angegebenen Gewichtsteile der Beschleuniger 1 und 2 gegeben und bei Raumtemperatur gerührt bis alle zugegebenen Stoffe vollständig gelöst sind. Anschließend wird das Material für 2 Stunden auf die angegebene Temperatur temperiert und die in Tabelle 1 angegebene Menge des Härters zugesetzt, für eine Minute eingerührt und 20g des Materials zum Aushärten in einen Blechdeckel (Durchmesser 150 mm) gefüllt. Zur Bestimmung der Härtungsgeschwindigkeit wurde die Gelzeit bestimmt.

**Tabelle 1:**

| Beispiel | T | Beschleuniger | | | | | Gelzeit |
|---|---|---|---|---|---|---|---|
| | °C | Beschl. 1 | Gewichtsteile | Gewichtsteile Beschl. 2 | Härter | Gewichtsteile | in [min] |
| VB1 | 20 | Z | 0,5 | 0 | H1 | 1,5 | 22 |
| 1 | 20 | Z | 0,5 | 0,2 | H1 | 1,5 | 12 |
| 2 | 20 | Z | 0,5 | 0,5 | H1 | 1,5 | 11 |
| VB2 | 10 | Z | 0,5 | 0 | H1 | 2,5 | 80 |
| 3 | 10 | Z | 0,5 | 0,2 | H1 | 2,5 | 14 |
| 4 | 10 | Z | 0,5 | 0,5 | H1 | 2,5 | 9 |
| VB3 | 5 | Z | 0,5 | 0 | H1 | 3 | > 90 |
| 5 | 5 | Z | 0,5 | 0,2 | H1 | 3 | 18 |
| 6 | 5 | Z | 0,5 | 0,5 | H1 | 3 | 14 |

### Vorstufe 4:

Das Reaktionsharz, welches aus Vorstufe 2 erhalten wurde, wird mit 10 Gewichtsteile Titandioxid (TR 92), 54,6 Gewichtsteile Feinfüllstoff (Omyacarb 15 GU), 0,3 Gewichtsteile eines Dispergierhilfsmittels (TEGO® Dispers 670) und 0,1 Gewichtsteile Rheologieadditiv (Byk 410) unter Dispergieren zu einer Fahrbahnmarkierungsfarbe konfektioniert.

Dabei wird das Harz vorgelegt, ein Teil des Rheologieadditivs über einen Zeitraum von 5 Minuten eindispergiert, anschließend das Dispergierhilfsmittels ebenfalls über 5 Minuten, und darauf das Titandioxid und der Feinfüllstoff jeweils weitere 10 Minuten eindispergiert. Am Schluss wird die restliche Menge des Dispergierhilfsmittels eingearbeitet.

### Allgemeine Vorschrift für Beispiele 7-12 und Vergleichsbeispiele (VB) 4-6:

Zu 100 Gewichtsteilen des gefüllten Reaktionsharzes, das durch Vorstufe 4 erhalten wurde, werden die in Tabelle 2 angegebenen Gewichtsteile der Beschleuniger 1 und 2 zugegeben und bei Raumtemperatur gerührt, bis alle zugegebenen Stoffe vollständig gelöst sind. Anschließend wird das Material für 2 Stunden auf die angegebene Temperatur temperiert und die in Tabelle 1 angegebene Menge des Härters zugesetzt, für eine Minute eingerührt und 20 g des Materials zum Aushärten in einen Blechdeckel (Durchmesser 150 mm) gefüllt. Zur Bestimmung der Härtungsgeschwindigkeit wurde die Gelzeit bestimmt. Die Proben zeigten keine Vergilbungen.

**Tabelle 2:**

| Beispiel | Temp | Beschleuniger | | | | | Gelzeit |
|---|---|---|---|---|---|---|---|
| | °C | Beschl. 1 | Gewichtsteile | Gewichtsteile Beschl. 2 | Härter | Gewichtsteile | in [min] |
| VB4 | 20 | Z | 0,5 | 0 | H1 | 1,5 | 5 |
| B7 | 20 | Z | 0,5 | 0,2 | H1 | 1,5 | 2 |
| B8 | 20 | Z | 0,5 | 0,5 | H1 | 1,5 | 2 |
| VB5 | 10 | Z | 0,5 | 0 | H1 | 2,5 | 8 |
| B9 | 10 | Z | 0,5 | 0,2 | H1 | 2,5 | 4 |
| B10 | 10 | Z | 0,5 | 0,5 | H1 | 2,5 | 3 |
| VB6 | 5 | Z | 0,5 | 0 | H1 | 3 | 30 |
| B11 | 5 | Z | 0,5 | 0,2 | H1 | 3 | 9 |
| B12 | 5 | Z | 0,5 | 0,5 | H1 | 3 | 5 |

### Beispiel 13:

Zu 100 Gewichtsteilen des Reaktionsharzes, das durch Vorstufe 2 erhalten wurde, werden 2 Gewichtsteile C und 0,1 Gewichtsteile TPP gegeben und bei Raumtemperatur gerührt bis alle zugegebenen Stoffe vollständig gelöst sind. Anschließend wird das Material für 2 Stunden auf die angegebene Temperatur temperiert und 4 Gewichtsteile H1 zugesetzt, für eine Minute eingerührt und 20 g des Materials in einen PP-Becher (Durchmesser 40 mm) gefüllt. Zur Bestimmung der Härtungsgeschwindigkeit wurde die Gelzeit bestimmt, zu der das Material vom viskosen Material zum Gel wird. Es wurde eine Gelzeit von 19 Minuten bestimmt.

### Beispiel 14:

Zu 100 Gewichtsteilen des Reaktionsharzes, das durch Vorstufe 2 erhalten wurde, werden 2 Gewichtsteile Z und 0,1 Gewichtsteile TPP gegeben und bei Raumtemperatur gerührt bis alle zugegebenen Stoffe vollständig gelöst sind. Anschließend wird das Material für 2 Stunden auf die angegebene Temperatur temperiert und 4 Gewichtsteile HZ zugesetzt, für eine Minute eingerührt und 20 g des Materials in einen PP-Becher (Durchmesser 40 mm) gefüllt. Zur Bestimmung der Härtungsgeschwindigkeit wurde die Gelzeit bestimmt, zu der das Material vom viskosen Material zum Gel wird. Es wurde eine Gelzeit von 16 Minuten bestimmt.

### Beispiel 15:

Zu 100 Gewichtsteilen des gefüllten Reaktionsharzes, das durch Vorstufe 4 erhalten wurde, werden 1,5 Gewichtsteile Z und 0,5 Gewichtsteile Triphenylphosphin gegeben und bei Raumtemperatur gerührt bis alle zugegebenen Stoffe vollständig gelöst sind. Anschließend wird das Material für 2 Stunden auf Raumtemperatur temperiert und mit 2 Gewichtsteilen HZ zugesetzt, für eine Minute eingerührt und das Material zum Aushärten in 200µm Schichtdicke auf eine Polypropylenunterlage gerakelt. Parallel wurde eine Probe von 20 g in einem Polypropylenbecher (Durchmesser 40 mm) gegossen und hiervon die Topfzeit bestimmt.

Es wurde eine Topfzeit von 3 Minuten gemessen. Die gerakelte dünne Schicht war nach 35 min klebfrei und zeigte keinerlei Vergilbung.

### Beispiel 16 und Vergleichsbeispiele 7 und 8:

Zu 100 Gewichtsteilen des gefüllten Reaktionsharzes, das durch Vorstufe 4 erhalten wurde, werden die in Tabelle 3 angegebenen Gewichtsteile der Beschleuniger 1 und 2 zugegeben und bei Raumtemperatur gerührt bis alle zugegebenen Stoffe vollständig gelöst sind. Anschließend wird das Material für 2 Stunden auf Raumtemperatur temperiert und mit 2 Gewichtsteilen HZ zugesetzt, für eine Minute eingerührt und das Material zum Aushärten in 700 µm Schichtdicke auf eine Polypropylenunterlage aufgerakelt. Parallel wurde eine Probe von 20 g in einem Polypropylenbecher (Durchmesser 40 mm) gegossen und hiervon die Topfzeit und die Zeit bis zum Temperaturmaximum bestimmt

**Tabelle 3:**

| Beispiel | Beschl.1 | GT | Beschl.2 | GT | tₘₐₓ (min) | Tₘₐₓ (°C) | Schichtdicken 700µm |
|---|---|---|---|---|---|---|---|
| VB7 | Z | 0,5 | - | - | 29 | 56 | Reaktion springt nicht an, Oberfläche bleibt auch nach Stunden klebrig |
| VB8 | - | - | TPP | 0,2 | 9 | 43 | kurzes Anspringen der Reaktion, dann Absterben, keine klebfreie Aushärtung |
| B16 | Z | 0,5 | TPP | 0,2 | 13 | 65 | klebfreie Aushärtung in 700µm |

| | | | | | | | |
|---|---|---|---|---|---|---|---|
| GT: Gewichtsteile; Beschl.: Beschleunigerkomponente; tₘₐₓ: Zeit bis zum Temperaturmaximum; Tₘₐₓ: gemessenes Temperaturmaximum | | | | | | | |

## Patentansprüche

1. 2K-Reaktionsharz auf (Meth)acrylatbasis, **dadurch gekennzeichnet, dass** die beiden Komponenten des Reaktionsharzes zusammen folgende Inhaltsstoffe aufweisen:
0,5 Gew% bis 30 Gew% mehrfunktionelle Methacrylate als Vernetzer,
20 Gew% bis 85 Gew% (Meth)acrylate und optional mit (Meth)acrylaten copolymerisierbare Monomere,
0 Gew% bis 50 Gew% Urethan(meth)acrylate,
3 Gew% bis 40 Gew% Präpolymere,
gegebenenfalls weitere Hilfsstoffe und
0,4 Gew% bis 10 Gew% eines Härtersystems enthaltend
0,15 Gew bis 5 Gew% Permaleinate,
0,1 Gew% bis 5 Gew% eines Zinksalzes,
0,1 Gew% bis 3,5 Gew% einer Schwefelverbindung und
0,02 Gew% bis 1,0 Gew% einer Phophorverbindung,
und dass das oder die Permaleinate einerseits und die Phosphorverbindung sowie die Schwefelverbindung andererseits in getrennten Komponenten des 2K-Reaktionsharzes vor dem Zusammenmischen der beiden Komponenten enthalten sind.

2. 2K-Reaktionsharz gemäß Anspruch 1, **dadurch gekennzeichnet, dass** das Reaktionsharz folgende Inhaltsstoffe aufweist:
2 Gew% bis 20 Gew% Dimethacrylate,
40 Gew% bis 75 Gew% % (Meth)acrylate und optional mit (Meth)acrylaten copolymerisierbare Monomere,
0 Gew% bis 50 Gew% Urethan(meth)acrylate,
15 Gew% bis 35 Gew% Poly(meth)acrylate, gegebenenfalls weitere Hilfsstoffe und
1,5 Gew% bis 7,5 Gew% eines Härtersystems enthaltend
0,5 Gew bis 2,0 Gew% Permaleinate,
0,5 Gew% bis 2,5 Gew% Zinkoleat oder eines Zinkalkylglykolthiolats,
0,5 Gew% bis 2,5 Gew% Thiole, und
0,05 Gew% bis 0,5 Gew% Phosphine.

3. 2K-Reaktionsharz gemäß Anspruch 2, **dadurch gekennzeichnet, dass** es sich bei dem Zinkoleat um Zinkstearat handelt.

4. 2K-Reaktionsharz gemäß Anspruch 1, **dadurch gekennzeichnet, dass** es sich bei dem Permaleinat um tert-Butylmonoperoxomaleinsäureester handelt.

5. 2K-Reaktionsharz gemäß Anspruch 1, **dadurch gekennzeichnet, dass** es sich bei der Schwefelverbindung um einen Alyklthioglykolat handelt.

6. 2K-Reaktionsharz gemäß Anspruch 1, **dadurch gekennzeichnet, dass** es sich bei der Phosphorverbindung um Triphenylphosphin handelt.

7. 2K-Reaktionsharz gemäß Anspruch 1, **dadurch gekennzeichnet, dass** es aminfrei ist.

8. 2K-Reaktionsharz gemäß Anspruch 1, **dadurch gekennzeichnet, dass** die erste und die zweite Komponente des Reaktionsharzes unterschiedlich zusammengesetzt sind.

9. 2K-Reaktionsharz gemäß Anspruch 7, **dadurch gekennzeichnet, dass** die zweite Komponente des Reaktionsharzes ausschließlich aus Bestandteilen des Härtersystems zusammengesetzt ist, die nicht in der ersten Komponente enthalten sind.

10. 2K-Reaktionsharz gemäß Anspruch 1, **dadurch gekennzeichnet, dass** die erste und die zweite Komponente des Reaktionsharzes mit Ausnahme der Bestandteile des Härtersystems identisch zusammengesetzt sind.

11. 2K-Reaktionsharz gemäß Anspruch 1, **dadurch gekennzeichnet, dass** das Reaktionsharz folgende Inhaltsstoffe aufweist:
2 Gew% bis 20 Gew% Dimethacrylate,
40 Gew% bis 75 Gew% (Meth)acrylate und optional mit (Meth)acrylaten copolymerisierbare Monomere,
0 Gew% bis 50 Gew% Urethan(meth)acrylate,
15 Gew% bis 35 Gew% Poly(meth)acrylate und gegebenenfalls weitere Hilfsstoffe und
1,5 Gew% bis 7,5 Gew% eines Härtersystems enthaltend
0,5 Gew% bis 2,0 Gew% eines Alkylmonoperoxomaleinsäureesters,
0,5 Gew% bis 2,5 Gew% Zinkstearat oder Zink-2-ethylhexylglykolthiolat,
0,5 Gew% bis 2,5 Gew% Ethylhexylglykolthiolat und
0,05 Gew% bis 0,5 Gew% Triphenylphosphin.

12. 2K-Reaktionsharz gemäß Anspruch 1, **dadurch gekennzeichnet, dass** die 2 Komponenten vor oder während dem Applizieren gemischt werden.

13. Kaltplastik, **dadurch gekennzeichnet, dass** die Kaltplastik folgende Bestandteile aufweist:
5 Gew% bis 80 Gew% des 2K-Reaktionsharzes gemäß einem der Ansprüche 1 bis 12,
5 Gew% bis 15 Gew% eines anorganischen Pigments, bevorzugt Titandioxid und
15 Gew% bis 90 Gew% mineralische Füllstoffe.

14. Verwendung eines 2K-Reaktionsharzes gemäß einem der Ansprüche 1 bis 12 zur Herstellung von Beschichtungen mit einer Dicke zwischen 20 µm und 4 mm.

15. Verwendung gemäß Anspruch 14 zur Herstellung von Beschichtungen mit einer Dicke zwischen 100 und 500 µm.

16. Verwendung gemäß einem der Ansprüche 14 oder 15, **dadurch gekennzeichnet, dass** es sich bei der Beschichtung um eine Fahrbahnmarkierung, eine Reaktivbeschichtung, eine Intumeszenbeschichtung, einzelne Schichten einer Bodenbeschichtung oder einen Topcoat handelt.

17. Verwendung einer Kaltplastik gemäß Anspruch 13 als Fahrbahnmarkierung, einzelne Schichten einer Bodenbeschichtung, als Reaktivbeschichtung oder Intumeszenbeschichtung mit einer Dicke zwischen 20 µm und 4 mm.

## Claims

1. 2-component reactive resin based on (meth)acrylate, **characterized**
**in that** the two components of the reactive resin together comprise the following ingredients:
0.5 wt% to 30 wt% of polyfunctional methacrylates as crosslinkers,
20 wt% to 85 wt% of (meth)acrylates and optionally monomers copolymerizable with (meth)acrylates,
0 wt% to 50 wt% of urethane (meth)acrylates,
3 wt% to 40 wt% of prepolymers, optionally further auxiliaries and
0.4 wt% to 10 wt% of a curing agent system comprising
0.15 wt% to 5 wt% of permaleates,
0.1 wt% to 5 wt% of a zinc salt,
0.1 wt% to 3.5 wt% of a sulfur compound and
0.02 wt% to 1.0 wt% of a phosphorus compound, and in that the permaleate or permaleates on the one hand and the phosphorus compound and also the sulfur compound on the other hand are present in separate components of the 2-component reactive resin before the two components are mixed together.

2. 2-component reactive resin according to Claim 1, **characterized**
**in that** the reactive resin comprises the following ingredients:
2 wt% to 20 wt% of dimethacrylates,
40 wt% to 75 wt% of (meth)acrylates and optionally monomers copolymerizable with (meth)acrylates,
0 wt% to 50 wt% of urethane (meth)acrylates,
15 wt% to 35 wt% of poly(meth)acrylates, optionally further auxiliaries and
1.5 wt% to 7.5 wt% of a curing agent system comprising
0.5 wt% to 2.0 wt% of permaleates,
0.5 wt% to 2.5 wt% of zinc oleate or a zinc alkyl glycol thiolate,
0.5 wt% to 2.5 wt% of thiols and
0.05 wt% to 0.5 wt% of phosphines.

3. 2-component reactive resin according to Claim 2, **characterized in that** the zinc oleate is zinc stearate.

4. 2-component reactive resin according to Claim 1, **characterized in that** the permaleate is tert-butyl monoperoxomaleate.

5. 2-component reactive resin according to Claim 1, **characterized in that** the sulfur compound is an alkyl thioglycolate.

6. 2-component reactive resin according to Claim 1, **characterized in that** the phosphorus compound is a triphenylphosphine.

7. 2-component reactive resin according to Claim 1, **characterized in that** it is amine-free.

8. 2-component reactive resin according to Claim 1, **characterized in that** the first and second components of the reactive resin are different in composition.

9. 2-component reactive resin according to Claim 7, **characterized in that** the second component of the reactive resin is composed exclusively of constituents of the curing agent system which are not present in the first component.

10. 2-component reactive resin according to Claim 1, **characterized in that** the first and second components of the reactive resin are identical in composition with the exception of the constituents of the curing agent system.

11. 2-component reactive resin according to Claim 1, **characterized**
**in that** the reactive resin comprises the following ingredients:
2 wt% to 20 wt% of dimethacrylates,
40 wt% to 75 wt% of (meth)acrylates and optionally monomers copolymerizable with (meth)acrylates,
0 wt% to 50 wt% of urethane (meth)acrylates,
15 wt% to 35 wt% of poly(meth)acrylates and optionally further auxiliaries and
1.5 wt% to 7.5 wt% of a curing agent system comprising
0.5 wt% to 2.0 wt% of an alkyl monoperoxomaleate,
0.5 wt% to 2.5 wt% of zinc stearate or zinc 2-ethylhexyl glycol thiolate,
0.5 wt% to 2.5 wt% of ethylhexyl glycol thiolate and
0.05 wt% to 0.5 wt% of triphenylphosphine.

12. 2-component reactive resin according to Claim 1, **characterized in that** the two components are mixed before or during application.

13. Cold plastic **characterized in that** the cold plastic comprises the following constituents:
5 wt% to 80 wt% of the 2-component reactive resin according to any of Claims 1 to 12,
5 wt% to 15 wt% of an inorganic pigment, preferably titanium dioxide, and
15 wt% to 90 wt% of mineral fillers.

14. Use of a 2-component reactive resin according to any of Claims 1 to 12 for producing coatings having a thickness of between 20 µm and 4 mm.

15. Use according to Claim 14 for producing coatings having a thickness of between 100 and 500 µm.

16. Use according to either of Claims 14 and 15, **characterized in that** the coating is a trafficway marking, a reactive coating, an intumescent coating, individual layers of a floor coating, or a topcoat.

17. Use of a cold plastic according to Claim 13 as trafficway marking, individual layers of a floor coating, as reactive coating or intumescent coating having a thickness of between 20 µm and 4 mm.

## Revendications

1. Résine réactionnelle 2K à base de (méth)acrylate, **caractérisée en ce que** les deux composants de la résine réactionnelle comprennent ensemble les constituants suivants :
0,5 % en poids à 30 % en poids de méthacrylates polyfonctionnels en tant qu'agents de réticulation,
20 % en poids à 85 % en poids de (méth)acrylates et éventuellement de monomères copolymérisables avec des (méth)acrylates,
0 % en poids à 50 % en poids de (méth)acrylates d'uréthane,
3 % en poids à 40 % en poids de prépolymères, éventuellement d'autres adjuvants et
0,4 % en poids à 10 % en poids d'un système durcisseur contenant
0,15 % en poids à 5 % en poids de permaléinates,
0,1 % en poids à 5 % en poids d'un sel de zinc,
0,1 % en poids à 3,5 % en poids d'un composé de soufre et
0,02 % en poids à 1,0 % en poids d'un composé de phosphore,
et **en ce que** le ou les permaléinates d'un côté et le composé de phosphore et le composé de soufre d'un autre côté sont contenus dans des composants séparés de la résine réactionnelle 2K avant le mélange des deux composants.

2. Résine réactionnelle 2K selon la revendication 1, **caractérisée en ce que** la résine réactionnelle comprend les constituants suivants :
2 % en poids à 20 % en poids de diméthacrylates,
40 % en poids à 75 % en poids de (méth)acrylates et éventuellement de monomères copolymérisables avec des (méth)acrylates,
0 % en poids à 50 % en poids de (méth)acrylates d'uréthane,
15 % en poids à 35 % en poids de poly(méth)acrylates, éventuellement d'autres adjuvants et
1,5 % en poids à 7,5 % en poids d'un système durcisseur contenant
0,5 % en poids à 2,0 % en poids de permaléinates,
0,5 % en poids à 2,5 % en poids d'un oléate de zinc ou d'un alkylglycolthiolate de zinc,
0,5 % en poids à 2,5 % en poids de thiols et
0,05 % en poids à 0,5 % en poids de phosphines.

3. Résine réactionnelle 2K selon la revendication 2, **caractérisée en ce que** l'oléate de zinc est le stéarate de zinc.

4. Résine réactionnelle 2K selon la revendication 1, **caractérisée en ce que** le permaléinate est un ester de l'acide tert.-butylmonoperoxomaléique.

5. Résine réactionnelle 2K selon la revendication 1, **caractérisée en ce que** le composé de soufre est un alkylthioglycolate.

6. Résine réactionnelle 2K selon la revendication 1, **caractérisée en ce que** le composé de phosphore est la triphénylphosphine.

7. Résine réactionnelle 2K selon la revendication 1, **caractérisée en ce qu'**elle est exempte d'amines.

8. Résine réactionnelle 2K selon la revendication 1, **caractérisée en ce que** le premier et le second composant de la résine réactionnelle sont de composition différente.

9. Résine réactionnelle 2K selon la revendication 7, **caractérisée en ce que** le second composant de la résine réactionnelle est composé exclusivement par les constituants du système durcisseur qui ne sont pas contenus dans le premier composant.

10. Résine réactionnelle 2K selon la revendication 1, **caractérisée en ce que** le premier et le second composant de la résine réactionnelle sont de composition identique à l'exception des constituants du système durcisseur.

11. Résine réactionnelle 2K selon la revendication 1, **caractérisée en ce que** la résine réactionnelle comprend les constituants suivants :
2 % en poids à 20 % en poids de diméthacrylates,
40 % en poids à 75 % en poids de (méth)acrylates et éventuellement de monomères copolymérisables avec des (méth)acrylates,
0 % en poids à 50 % en poids de (méth)acrylates d'uréthane,
15 % en poids à 35 % en poids de poly(méth)acrylates, et éventuellement d'autres adjuvants et
1,5 % en poids à 7,5 % en poids d'un système durcisseur contenant
0,5 % en poids à 2,0 % en poids d'un ester d'acide alkylmonoperoxomaléique,
0,5 % en poids à 2,5 % en poids de stéarate de zinc ou d'un 2-éthylhexylglycolthiolate de zinc,
0,5 % en poids à 2,5 % en poids d'éthylhexylglycolthiolate et
0,05 % en poids à 0,5 % en poids de triphénylphosphine.

12. Résine réactionnelle 2K selon la revendication 1, **caractérisée en ce que** les 2 composants sont mélangés avant ou pendant l'application.

13. Plastique froid, **caractérisé en ce que** le plastique froid comprend les constituants suivants :
5 % en poids à 80 % en poids de la résine réactionnelle 2K selon l'une quelconque des revendications 1 à 12,
5 % en poids à 15 % en poids d'un pigment inorganique, de préférence de dioxyde de titane, et
15 % en poids à 90 % en poids de charges minérales.

14. Utilisation d'une résine réactionnelle 2K selon l'une quelconque des revendications 1 à 12 pour la fabrication de revêtements d'une épaisseur comprise entre 20 µm et 4 mm.

15. Utilisation selon la revendication 14 pour la fabrication de revêtements d'une épaisseur comprise entre 100 et 500 µm.

16. Utilisation selon l'une quelconque des revendications 14 ou 15, **caractérisée en ce que** le revêtement est un marquage routier, un revêtement réactif, un revêtement intumescent, des couches individuelles d'un revêtement de sol ou un revêtement de surface.

17. Utilisation d'un plastique froid selon la revendication 13 en tant que marquage routier, couches individuelles d'un revêtement de sol, en tant que revêtement réactif ou revêtement intumescent d'une épaisseur comprise entre 20 µm et 4 mm.
